(19) Europäisches Patentamt
European Patent Office
Office européen des brevets

(11) Publication number: 0 158 732
A1

(12) # EUROPEAN PATENT APPLICATION

(21) Application number: 84115906.4

(22) Date of filing: 20.12.84

(51) Int. Cl.$^4$: C 08 G 73/10
C 08 L 79/08

(30) Priority: 30.12.83 US 567333

(43) Date of publication of application:
23.10.85 Bulletin 85/43

(84) Designated Contracting States:
DE FR GB IT NL

(71) Applicant: GENERAL ELECTRIC COMPANY
1 River Road
Schenectady New York 12305(US)

(72) Inventor: Holub, Fred Frank
2263 Preisman Drive
Schenectady New York 12309(US)

(72) Inventor: Floryan, Daniel Edwin
Route 49, Colonial Acres
Pittsfield Massachusetts 01201(US)

(74) Representative: Schüler, Horst, Dr. et al,
Kaiserstrasse 41
D-6000 Frankfurt/Main 1(DE)

(54) **Polyetherimide-polyethersulfoneimide copolymers.**

(57) Polyetherimide-polyethersulphoneimide copolymers are provided by reacting an aromatic bis(ether anhydride), a diaminosulphone compound and an organic diamine.

EP 0 158 732 A1

Croydon Printing Company Ltd.

# POLYETHERIMIDE-POLYETHERSULFONEIMIDE COPOLYMERS

## Background

Polyetherimides are amorphous, high performance engineering thermoplastics characterized by high heat resistance, high strength and modulus, good electrical properties which remain stable over a wide range of temperatures and frequencies. Unmodified polyetherimide resin is transparent and exhibits inherent flame resistance and low smoke evolution without additives.

Polyetherimides are generally provided by effecting reaction between certain aromatic bis(etheranhydride) and organic diamine. The resulting polymer exhibits high rigidity, creep resistance and high heat deflection temperatures due to the rigid aromatic imide functionality while the ether moiety confers the necessary degree of chain flexibility for good melt procesibility and flow behavior.

U.S. Patent 4,107,147 discloses polysulphoneimide compounds. These compounds are provided by reacting organic diamines with aromatic bis(sulfoneanhydrides). Although these compounds have the advantage of the rigid aromatic imide functionality, they suffer from the lack of those properties that are contributed to a polymer having an ether moiety.

## SUMMARY OF THE INVENTION

The copolymers of the present invention contain repeating units of the following structural formulas:

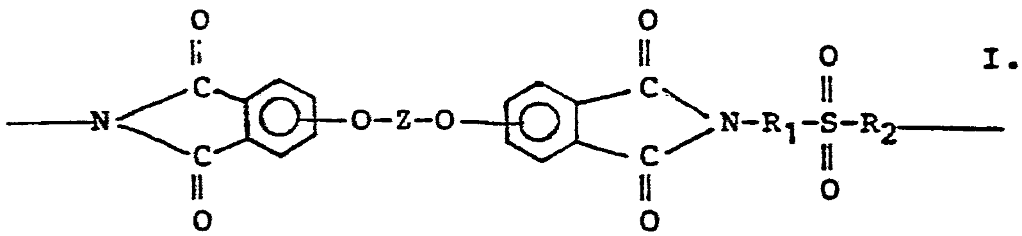

I.

and

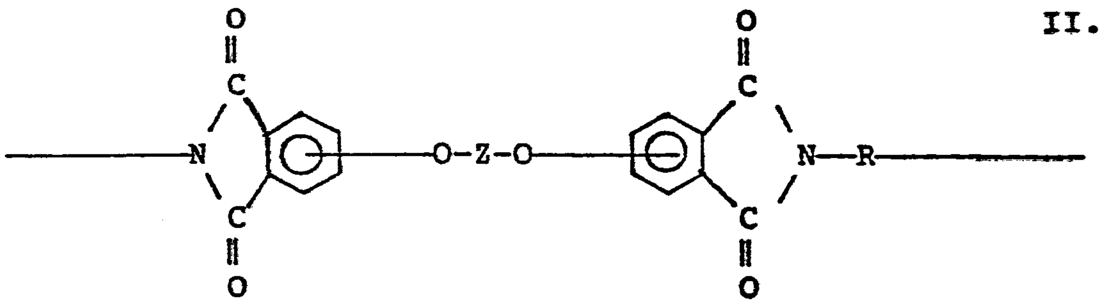

II.

wherein Z is a member of the class consisting of (1):

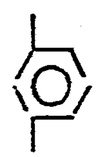 , 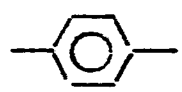 , 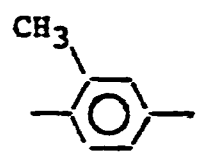 ,

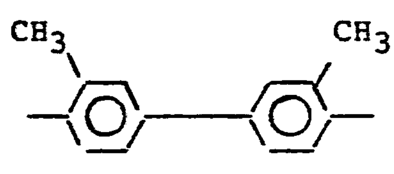 , 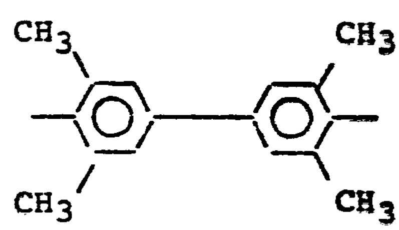

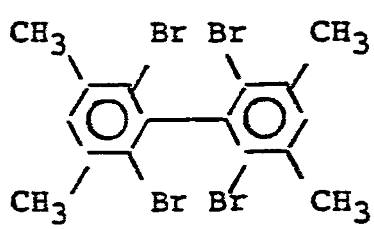 and 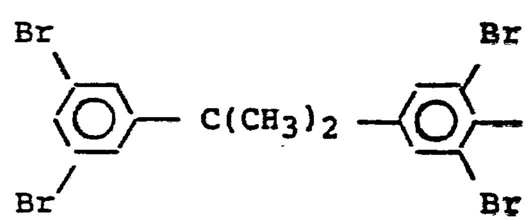

and (2) divalent organic radicals of the general

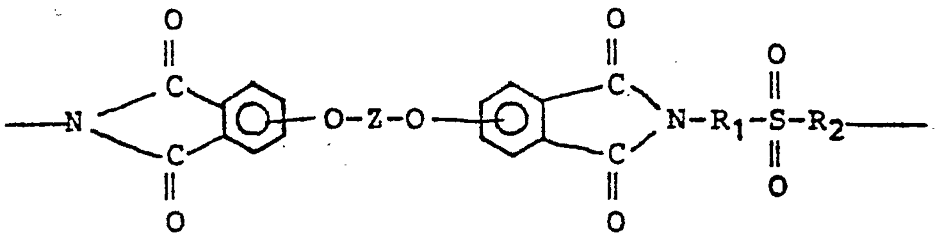 I.

and

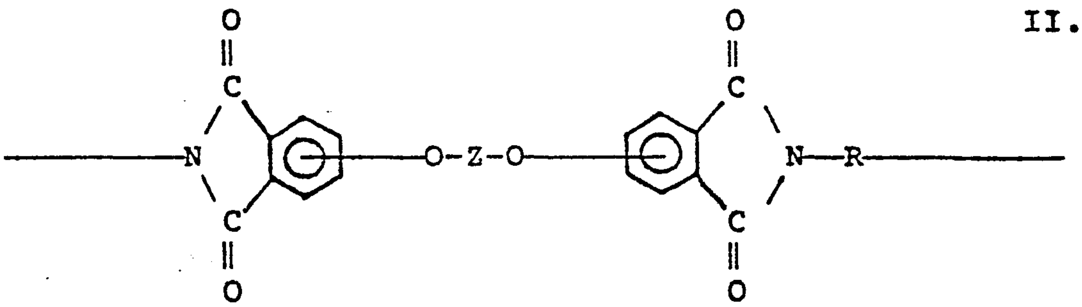 II.

where Z is a member of the class consisting of (1):

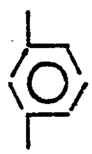 , 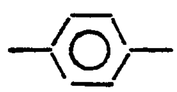 , 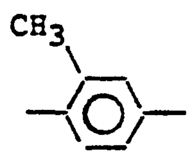 ,

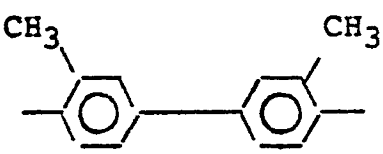 , 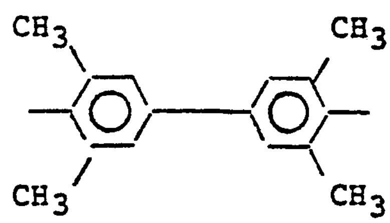

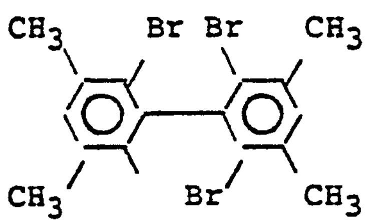 and 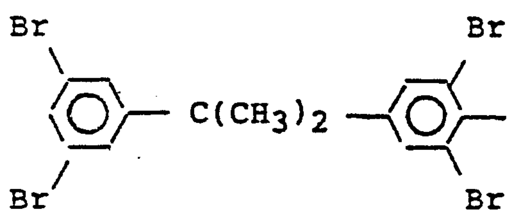

and (2) divalent organic radicals of the general

formula:

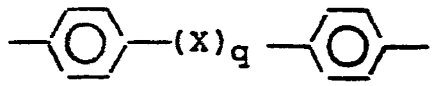

where X is a member selected from the class consisting of divalent radicals of the formulas,

$-C_yH_{2y}-$, 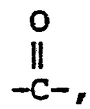, 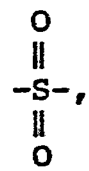, -O- and -S-

where q is 0 or 1, y is a whole number from 1 to 5, the divalent bonds of the -O-Z-O-radical being situated on the phthalic anhydride end groups, in the 3,3'-3,4'-, 4,3'- or the 4,4' -positions, and R is a divalent organic radical selected from the class consisting of (a) aromatic hydrocarbon radicals having from 6-20 carbon atoms and halogenated derivatives thereof, (b) alkylene radicals and cycloalkylene radicals having from 2-20 carbon atoms, $C_{(2-8)}$ alkylene terminated polydiorganosiloxane, and (c) divalent radicals included by the formula:

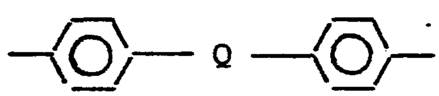

where Q is a member selected from the class consisting of:

-O-, 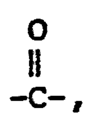, -S-, and $-C_xH_{2x}-$,

where x is a whole number from 1 to 5 inclusive and $R_1$ and $R_2$ are each a divalent organic radical selected from the class consisting of (a) aromatic hydrocarbon radicals having from 6-20 carbon atoms and halogenated derivatives thereof and (b) alkylene radicals and cycloalkylene radicals having from 2-20 carbon atoms and $C_{(2-8)}$ alkylene terminated polyorganosiloxane.

3. The polyetherimide-polyethersulphoneimide copolymer of claim 2 wherein from 5 to 95 mole percent of the total diamine moiety is a diaminosulphone.

4. The polyetherimide-polyethersulphoneimide copolymer of claim 3 wherein from 10 to 90 mole percent of the total diamine moiety is a diaminosulphone.

5. The polyetherimide-polyethersulphoneimide copolymer of claim 4 wherein from 20 to 80 mole percent of the total diamine moiety is a diaminosulphone.

6. The polyetherimide-polyethersulphoneimide copolymer of claim 2 wherein $R_1$ and $R_2$ are each selected from the group consisting of aromatic hydrocarbon radicals having from 6 to 18 carbon atoms.

7. The polyetherimide-polyethersulphoneimide copolymer of claim 6 wherein $R_1$ and $R_2$ are aromatic hydrocarbon radicals having 6 carbon atoms.

8. The polyetherimide-polyethersulphoneimide copolymer of claim 2 wherein said copolymer is blended with natural rubber, synthetic rubber and synthetic resins selected from the group consisting of polycarbonates, polyamides, polysulphones, polyetheretherketones, polyamide-imides, polyphenylene oxide, polyesters or mixtures thereof.

9. The polyetherimide-polyethersulphoneimide copolymer of claim 8 wherein said copolymer is blended in amounts ranging from 5 to 75 percent by weight, based on the total weight of the blend.

10. The polyetherimide-polyethersulphoneimide copolymer of claim 9 wherein said copolymer is blended with polycarbonate or a polyester.

11. The polyetherimide-polyethersulphoneimide copolymer of claim 10 wherein said copolymer is blended with polyethylene terephthalate or polybutylene terephthalate.

4,4'-bis(3,4-dicarboxyphenoxy)diphenyl ether dianhydride;
1,3-bis(3,4-dicarboxyphenoxy)benzene dianhydride;
4,4'-bis(3,4-dicarboxyphenoxy)diphenyl sulfide dianhydride;
1,4-bis(3,4-dicarboxyphenoxy)benzene dianhydride;
4,4'-bis(3,4-dicarboxyphenoxy)benzophenone dianhydride;
4-(2,3-dicarboxyphenoxy)-4'-(3,4-dicarboxyphenoxy)-diphenyl-2,2-propane dianhydride; etc. and mixtures of such dianhydrides.

In addition, aromatic bis(ether anhydride)s also included by Formula III are shown by Koton, M.M.; Florinski, F.S.; Bessonov, M.I.; Rudakov, A. P. (Institute of Heteroorganic Compounds, Academy of Sciences, U.S.S.R.), U.S.S.R. 257,010, Nov. 11, 1969, Appln. May 3, 1967. In addition, dianhydrides are shown by M. M. Koton, F. S. Florinski, Zh. Org. Khin; 4(5), 774 (1968).

The diaminosulphones of Formula IV include for example,
bis(aminopentamethylene) sulfone;
bis(aminohexamethylene) sulfone;
bis(aminoheptamethylene) sulfone;
bis(aminooctamethylene) sulfone;
bis(aminorindecamethylene) sulfone;
bis(aminotridecamethylene) sulfone;
bis(aminohexadecamethylene) sulfone;
bis(aminononadecamethylene) sulfone;
bis(aminocylopentamethylene) sulfone;
bis(aminocyclohexamethylene) sulfone;
bis(aminocycloheptamethylene) sulfone;
m-diaminophenyl sulfone;
p-diaminophenyl sulfone;
aminophenyl, aminohexamethylene sulfone;
aminophenyl, aminoheptamethylene sulfone;

aminophenyl, aminooctamethylene sulfone, etc. and mixtures of such diaminosulfones.

The organic diamine of Formula V include, for example,

m-phenylenediamine,
p-phenylenediamine,
4,4'-diaminodiphenylpropane,
4,4'-diaminodiphenylmethane,
benzidine,
4,4'-diaminodiphenyl sulfide,
4,4'-diaminodiphenyl ether,
1,5-diaminonaphthalene,
3,3'-dimethylbenzidine,
3,3'-dimethoxybenzidine,
2,4-bis(β-amino-t-butyl)toluene,
bis(p-β-amino-t-butylphenyl)ether
bis(p-β-methyl-o-aminopentyl)benzine,
1,3-diamino-4-isopropylbenzene,
1,2-bis(3-aminopropoxy)ethane,
m-xylylenediamine,
p-xylylenediamine,
2,4-diaminotoluene,
2,6-diaminotoluene,
bis(4-aminoxyclohexyl)methane,
3-methylheptamethylenediamine,
4,4-dimethylheptamethylenediamine,
2,11-dodecanediamine,
2,2-dimethylpropylenediamine,
octamethylenediamine,
3-methoxyhexamethylenediamine,
2,5-dimethylhexamethylenediamine,
2,5-dimethylheptamethylenediamine,
3-methylheptamethylenediamine,
5-methylnonamethylenediamine,

1,4-cyclohexanediamine,
1,12-octadecanediamine,
bis(3-aminopropyl)sulfide,
N-methyl-bis(3-aminopropyl)amine
hexamethylenediamine,
heptamethylenediamine,
nonamethylenediamine,
decamethylenediamine,
bis(3-aminopropyl)tetramethyldisiloxane,
bis(4-aminobutyl)tetramethyldisiloxane, etc.,
and mixtures of such diamines.

In producing the polyetherimide polyethersulphoneimide copolymers of the present invention, a diaminosulphone of Formula IV and an organic diamine of Formula V are utilized. The molar ratio of the diaminosulphone and organic diamine can vary depending on the desired properties of the copolymers to be produced. The diaminosulphone can constitute from about 5 to 95 mole percent of the total diamine moiety reacted, with the balance being the diamine of Formula V i.e., 95 to 5 mole percent. Preferably, the diaminosulphone is from about 10 to 90 mole percent of the total diamine moiety, and particularly preferred copolymers are those in which the diaminosulphone moiety is from about 20 to 80 mole percent of the total diamine moiety.

By controlling the proportions of the polymeric units of Formulas I and II, each having predetermined properties, a copolymer can be produced having superior properties over a polymer containing only one of the polymeric units. In general, the higher proportion of the polymeric units of Formula I will result in a polyethersulphoneimide having a higher glass transition temperature. On the other hand, a polyetherimide polyethersulphoneimide copolymer having a higher proportion of the polymeric units of Formula II will have lower glass transition temperatures.

Copolymers having greater than 1, e.g. 10 to 10,000 or more polymeric units of Formula I and Formula II can be formed. These polymers can be blended with various fillers such as finely divided silica, glass fibers, carbon whiskers, perlite, etc. The resulting filled compositions can, on a weight basis, have a proportion of from about 1 part to 200 parts of filler per hundred parts of copolymer. The blending of the filler with the copolymer can be achieved by adding the filler prior to forming the melt or directly to the melt. Stirring can be effected with standard agitating means to facilitate blending the ingredients.

The novel copolymers of the present invention have application in a wide variety of physical shapes and form, including their use as films, molding compounds, coatings, etc. Thus, the compositions of the present invention can be used in automobile and aviation applications for decorative and protective purposes, as high temperature electrical insulation, for motor slot lines, in transformers, as dielectric capacitors, as coil and cable wrappings, for containers and container linings, in laminating structures where films of the present composition or where solutions of the claimed compositions of matter are applied to various heat-resistant or other type of materials such as asbestos, mica, glass fiber and the like and superposing the sheets one upon the other and thereafter subjecting them to elevated temperatures and pressures to effect flow and cure of the resinous binder to yield cohesive laminated structures. Alternatively, solutions of the compositions herein described can be coated on electrical conductors such as copper, aluminum, etc., and thereafter the coated conductor can be heated at elevated temperatures to remove the solvent and to effect curing of the compositions thereon. If desired, an additional overcoat may be applied to such

insulated conductors including the use of polymeric coatings, such as polyamides, polyesters, silicones, polyvinylformal resins, epoxy resins, other polyimides, polytetrafluoroethylene, etc.

The copolymers herein disclosed and claimed may be suitably incorporated with other materials to modify the properties of the latter or in turn they may be modified by the incorporation of the materials. For example, they may be compounded with substances such as natural or synthetic rubbers, synthetic resins such as polycarbonates, polyamides, polysulphones, polyethersulphones, polyetheretherketones, polyamideimides, polyphenylene oxide and polyesters such as polyethylene terephthalate and polybutlyene terephthalate. The blend may also contain mixtures of the above synthetic resins. Because of the advantageous high temperature properties of these polymeric compositions, the incorporation of these polymers in other polymers which may not be so favorably disposed, for instance, polycarbonate resins, polyphenylene oxide resins, polybutylene terephalate resins, etc. in amounts ranging from 5 to 75%, by weight, based on the total weight of the polyethersulfoneimide and the aforesaid resins, can improve the properties of the resins in which the polyethersulfoneimides of the present invention are incorporated.

The present invention is further illustrated by the following examples, which are not intended to be limiting.

<u>Example I</u>

To a suitable reaction vessel was charged 15cc of N-methyl pyrrolidone. Thereafter, 25 mole equivalents (m.eq.) of hexamethylene diamine, 25 m.eq. of diaminodiphenylsulphone and 50 m.eq. of 2,2-bis[4-(2,3-dicarboxyphenyoxy)phenyl]-propane dianhydride were added and mixed. The polymer solutions were cast and films were

obtained after heating at 250-290°C. The product polyethersulphoneimide had a Tg of 152°C. The Tg was determined on the film using a differential scanning calorimeter.

Example II

To a suitable reaction vessel was charged 15cc of N-methyl pyrrolidone. Thereafter, 25 m.eq. of m-xylylenediamine, 25 m.eq. of diaminodiphenylsulphone and 50 m.eq. of 2,2-bis[4-(2,3-dicarboxy)phenyl]-propane dianhydride were added and mixed. The polymer solutions were cast and films were obtained after heating at 250-290°C. The product polyethersulphoneimide had a Tg of 194°C and was determined as in Example I.

CLAIMS

1. A polyetherimide-polyethersulfoneimide copolymer which comprises a repeating unit of the formula:

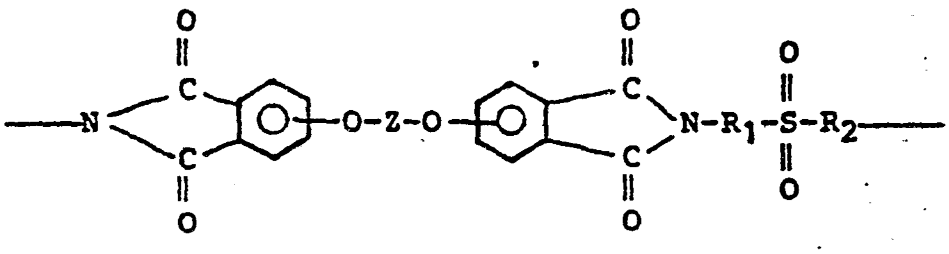

I.

where Z is a member of the class consisting of (1):

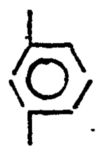
,
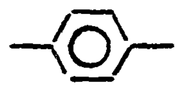
,
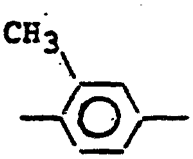
,
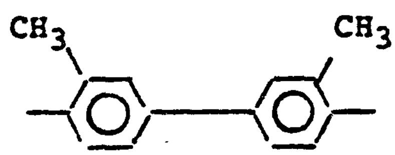
,
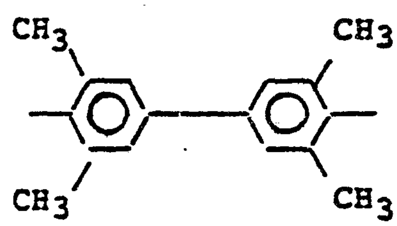

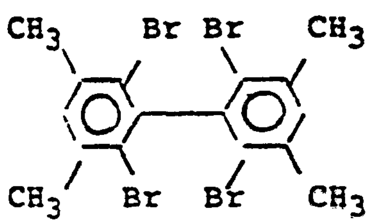
and
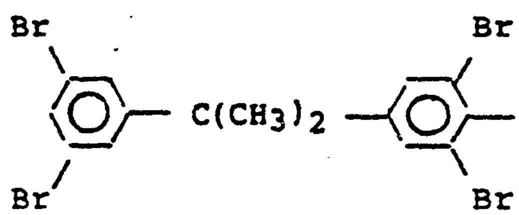

and (2) divalent organic radicals of the general formula:

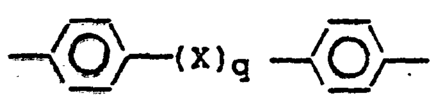

where X is a member selected from the class consisting of divalent radicals of the formulas,

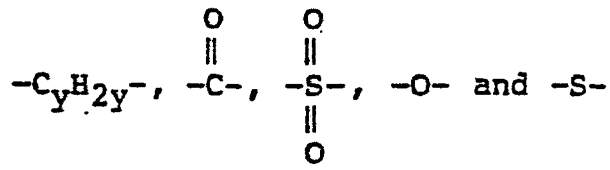

where q is 0 or 1, y is a whole number from 1 to 5, the divalent bonds of the -O-Z-O- radical being situated on the phthalic anhydride end groups, in the 3,3'-3,4'-, 4,3'- or the 4,4' -positions, and $R_1$ and $R_2$ are each divalent organic radicals independently selected from the class consisting of (a) aromatic hydrocarbon radicals having from 6 to about 20 carbon atoms and halogenated derivatives thereof, (b) alkylene radicals and cycloalkylene radicals having from 2 to about 20 carbon atoms, $C_{(2-8)}$ alkylene terminated polydiorganosiloxane and (c) divalent radicals included in the formula:

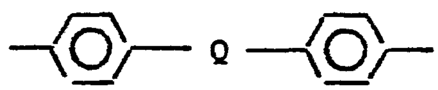

where Q is a member selected from the class consisting of:

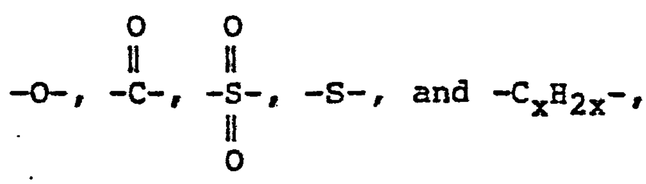

where x is a whole number from 1 to 5 inclusive.

2. A polyetherimide polyethersulphoneimide copolymer consisting essentially of the polymeric units of the formulas:

formula:

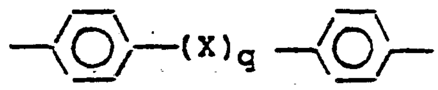

where X is a member selected from the class consisting of divalent radicals of the formulas,

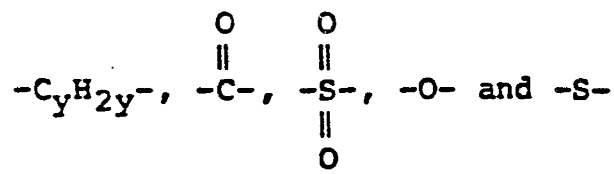

where q is 0 or 1, y is a whole number from 1 to 5, the divalent bonds of the -O-Z-O- radical being situated on the phthalic anhydride end groups, in the 3,3'-3,4'-, 4,3'- or the 4,4' -positions, and R is a divalent organic radical selected from the class consisting of (a) aromatic hydrocarbon radicals having from 6 to about 20 carbon atoms and halogenated derivatives thereof, (b) alkylene radicals and cycloalkylene radicals having from 2 to about 20 carbon atoms, $C_{(2-8)}$ alkylene terminated polydiorganosiloxane, and (c) divalent radicals included by the formula:

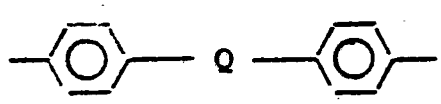

where Q is a member selected from the class consisting of:

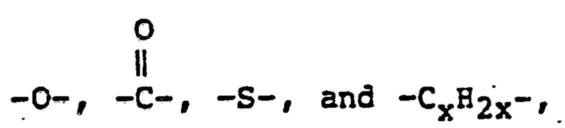

where x is a whole number from 1 to 5 inclusive and $R_1$ and $R_2$ are each divalent organic radical independently selected from the class consisting of (a) aromatic

hydrocarbon radicals having from 6 to about 20 carbon atoms and halogenated derivatives thereof, and (b) alkylene radicals and cycloalkylene radicals having from 2 to about 20 carbon atoms, $C_{(2-8)}$ alkylene terminated polydiorganosiloxane and (c) divalent radicals included by the formula:

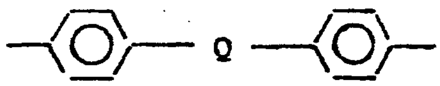

where Q is a member selected from the class consisting of:

$$-O-,\ -\overset{O}{\overset{\parallel}{C}}-,\ -\underset{\underset{O}{\parallel}}{\overset{\overset{O}{\parallel}}{S}}-,\ -S-,\ \text{and}\ -C_xH_{2x}-,$$

where x is a whole number from 1 to 5 inclusive.

## DETAILS OF DESCRIPTION

The present invention relates to polyetherimide-polyethersulphoneimide copolymers. These copolymers contain basically two types of repeating polymeric units. The first unit is the reaction product of a bis(ether anhydride) and a diaminosulphone compound. The second unit is the reaction product of a bis(ether anhydride) and a certain diamine compound.

The polyetherimide-polyethersulphoneimide copolymers of the present invention can be obtained by various methods. One procedure involves the reaction of any aromatic bis-(ether anhydride) of the formula:

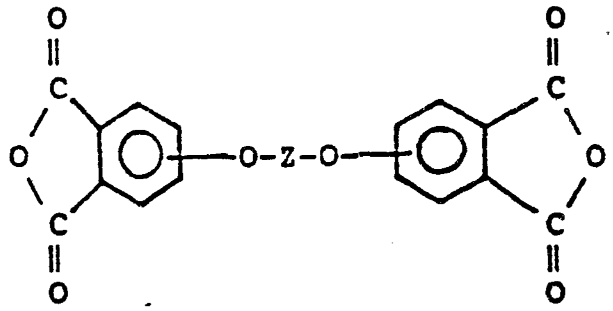

III.

where Z is defined hereinabove with a diaminosulphone of the formula:

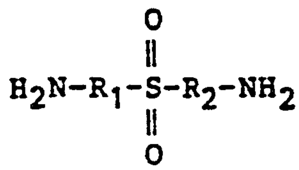

IV.

and a diamino compound of the formula:

$$H_2N-R-NH_2 \qquad V.$$

where R, $R_1$ and $R_2$ are independently selected from the groups herein defined. In general, the reaction can be advantageously carried out employing well-known solvents, e.g., o-dichlorobenzene, m-cresol/toluene, etc., in which to effect interaction between the dianhydrides, the diaminosulphones of Formula IV and the diamines of Formula V, at a temperature of from about 100°C to about 250°C. Alternatively, these copolymers can be prepared by melt polymerization of any dianhydride of Formula III with any diaminosulphone of Formula IV and diamine of Formula V while heating a mixture of the reactants to melt polymerization temperatures with concurrent intermixing. Generally, melt polymerization temperatures between about 200° and 400°C and preferably 230° to 300°C can be employed. Any order of addition of chain stoppers ordinarily employed in melt polymerizations can be employed. The conditions of the reaction and the

proportions of ingredients can be varied depending on the desired molecular weight, intrinsic viscosity, and solvent resistence. In general, equimolar amounts of the dianhydride and total diamine are employed for high molecular weight copolymers; however, in certain instances, a slight molar excess (about 1 to 5 mole percent) of either the diaminosulphone compound of Formula IV or the diamino compound of Formula V or mixtures thereof can be employed, resulting in the production of copolymers having terminal amine groups.

Methods of making polyetherimides having the repeating unit of Formula II are disclosed in U.S. Patent Nos. Heath et al. 3,847,867, Williams 3,847,869, Takekoshi et al. 3,850,885, White 3,852,242 and 3,855,178 etc. These disclosures are incorporated herein in their entirety by reference for the purpose of teaching, by way of illustration, general methods for preparing the polyetherimide-polyethersulphoneimide copolymers of the present invention.

The aromatic bis(ether anhydride)s of Formula III include for example,

2,2-bis[4-(2,3-dicarboxyphenoxy)phenyl]-propane dianhydride;

4,4'-bis(2,3-dicarboxyphenoxy)diphenyl ether dianhydride;

1,3-bis(2,3-dicarboxyphenoxy)benzene dianhydride;

4,4'-bis(2,3-dicarboxyphenoxy)diphenyl sulfide dianhydride;

1,4-bis(2,3-dicarboxyphenoxy)benzene dianhydride;

4,4'-bis(2,3-dicarboxyphenoxy)benzophenone dianhydride;

4,4'-bis(2,3-dicarboxyphenoxy)diphenyl sulfone dianhydride; etc.

2,2-bis[4-(3,4-dicarboxyphenoxy)phenyl]-propane dianhydride;

European Patent Office

# EUROPEAN SEARCH REPORT

0158732

Application number

EP 84 11 5906

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8 303 417 (GENERAL ELECTRIC)<br>--- | | C 08 G 73/10<br>C 08 L 79/08 |
| A | EP-A-0 033 394 (UNION CARBIDE)<br>--- | | |
| P,X | US-A-4 429 102 (T.L. EVANS)<br>* Claims *<br>----- | | |
| | | | TECHNICAL FIELDS SEARCHED (Int. Cl.4) |
| | | | C 08 G<br>C 08 L |

The present search report has been drawn up for all claims

| Place of search | Date of completion of the search | Examiner |
|---|---|---|
| THE HAGUE | 08-07-1985 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82